# EUROPÄISCHE PATENTANMELDUNG

(11) **EP 0 839 596 A1**
(43) Veröffentlichungstag der Anmeldung: **06.05.1998**
(21) Anmeldenummer: 97117912.2
(22) Anmeldetag: 16.10.1997
(51) Int. Cl.: B23K 20/10

(54) **Schweissverbindung von Wuchtgewichten an dünnwandigen Wellen**

(30) Priorität: 04.11.1996 DE 19645387
(71) Anmelder: Daimler-Benz Aktiengesellschaft, 70546 Stuttgart (DE)
(72) Erfinder: Reinhardt, Rudolf, 73732 Esslingen (DE); Horn, Helmut, Prof. Dr., 28717 Bremen (DE); Grünauer, Heinz, 86179 Augsburg (DE)

(57) **Zusammenfassung**

Die Erfindung betrifft eine punktförmige Schweißverbindung eines Wuchtbleches an der Außenseite eines rotationssymmetrischen, umlaufenden Hohlkörpers. Um auch dünnwandige Hohlkörper prozeßsicher, rasch und dauerfest bei unterschiedlichen Werkstoffpaarungen von Hohlkörper und Wuchtblech wuchten zu können, ist die Schweißverbindung erfindungsgemäß als eine Ultraschall-Schweißung ausgebildet, deren Wärmebeeinflussungszone von der Kontaktfläche zwischen Wuchtblech und Hohlkörper sich maximal um etwa 0,3 mm, vorzugsweise etwa 0,1 bis 0,15 mm in die Wandung des Hohlkörpers hineinerstreckt. Zweckmäßiger Weise erstreckt sich die Wärmebeeinflussungszone stärker in das Wuchtblech als in die Wandung des Hohlkörpers hinein. Unabhängig vom Hohlwellen-Werkstoff - Stahl, Aluminium oder Kunststoff - kann das Wuchtblech aus einem Metall hoher Dichte, insbesondere aus Stahl, Messing oder Kupfer bestehen. Bei faserverstärkten Kunststoff-Hohlwellen kann der Wuchtkörper ebenfalls aus Kunststoff oder aus einem auf der Kontaktseite mit Kunststoff beschichtetem Metallstreifen oder aus einem zusammengesinterten Metall/Kunststoff-Verbundwerkstoff bestehen.

## Beschreibung

Die Erfindung geht aus von einer Schweißverbindung von Wuchtgewichten an rotationssymmetrischen, rotierenden Hohlkörpern nach dem Oberbegriff von Anspruch 1, wie sie beispielsweise aus der DE 39 31 055 A1 als bekannt hervorgeht.

Üblicherweise weisen rotationssymmetrische, rotierende Hohlkörper der hier angesprochenen Art, insbesondere Hohlwellen oder Gehäuse von hydrodynamischen Drehmomentwandlern, fertigungsbedingt eine gewisse Unwucht auf, die durch örtlich gezieltes Befestigen einer gewichtsmäßig ausgesuchten Wuchtmasse, meist in Form eines Blechstreifens, kompensiert werden muß. Die zu Wuchtenden Werkstücke bestehen meist aus schweißbarem Stahl, so daß sich auch die Wuchtbleche anschweißen lassen. Auch die Gestaltfestigkeit der Hohlkörper und/oder deren Wandstärke sind in der Regel ausreichend groß, so daß Schweißungen zum Befestigen von Wuchtblechen ohne weiteres durchgeführt werden können.

Üblicherweise werden die Wuchtmassen zumindest in der Serienproduktion widerstandselektrisch angeschweißt, weil diese Schweißungen rasch, mit geringem sowie baulich kleinen apparativem Aufwand und prozeßsicher durchführbar sind. Allerdings erfordert diese Schweißart eine hohe Einbeulfestigkeit der Welle an der Befestigungsstelle des Wuchtbleches, damit die Schweißelektrode das anzuschweißende Wuchtblech mit der erforderlich hohen Kraft an die Welle anpressen kann, ohne daß die oberflächlich erweichte Wandung nachgibt. Zum anderen ist bei einer ausreichend großen Wandstärke die beim Schweißen eintretende Wärmebeeinflussungszone im Verhältnis zu der die Wärmebeeinflussungszone umgebenden, unbeeinflußtren Masse klein und somit tolerierbar.

Bei nicht widerstandselektrisch schweißbaren Wellen- und Wuchtblech-Werkstoffen, insbesondere Aluminium, schlägt die DE 30 35 437 C2 eine WIG-Schweißung an einem kleinen Loch im Wuchtblech vor. Hier ist die Wärmebeeinflussungszone relativ groß und diese Art der Wuchtblechbefestigung nur bei dickwandigen Hohlkörpern möglich. Die GB 2 147 388 A empfiehlt, Wuchtbleche an Aluminiumwellen anzunieten, wobei an der jeweiligen Wuchtstelle zuvor ein Nietschaft stumpf angeschweißt, das gelochte Wuchtblech auf ihn aufgesteckt und das überstehende Nietschaftende zu einem Nietkopf gedöppert wird. Diese Befestigungsart erlaubt zwar eine ungleiche Werkstoffpaarung, nämlich schwere Stahl- oder Kupfer-Wuchtbleche und eine Aluminium-Welle, jedoch verursacht das Anschweißen des Nietschaftes eine nicht unerhebliche Wärmebeinflussungszone. Darüber hinaus erfordert das kalte Andöppern des Nietkopfes eine ausreichende Beulsteifigkeit der Hohlwelle. Aus diesen Gründen ist demnach auch diese Art der Befestigungstechnik auf dickwandigere Hohlwellen festgelegt.

Zwar wäre es denkbar, die Wuchtbleche mittels Laserschweißungen an die Hohlwelle anzuschweißen, von denen gesagt wird, daß sie eine nur sehr kleine Wärmebeeinflussungszone hinterlassen. Beim Anschweißen von Wuchtblechen an Hohlwellen mittels Laser-Schweißpunkten würde jedoch der Laserstrahl zum einen eine immer noch relativ große Wärmebeeinflussungszone hinterlassen, die eine metallurgische Schwächung darstellt, die zumindest bei dünnwandigen Hohlwellen in ihrer Wirkung nicht vernachlässigbar ist, und zwar unabhängig davon, ob die Schweißstrahlrichtung tangential zum Wuchtblech und zur Wandung der Hohlwelle oder radial dazu gerichtet ist. Zum anderen wäre vom Investitionsvolumen her eine teure Laserschweißanlage für solche kleinen Schweißpunkte nicht rentabel; die Anlage würde nur während eines sehr geringen Anteils der Gesamtzeit tatsächlich dafür genutzt werden, wofür sie da ist, nämlich zum Schweißen; die übrige Zeit bliebe die Anlage ungenutzt.

Wegen der unvermeidbaren Wärmebeeinflussungszonen und/oder der Krafteinwirkungen auf die Hohlwellen beim Schweißen bestehen daher erhebliche Schwierigkeiten, Hohlwellen in Leichtbauweise rasch und prozeßsicher zu wuchten. Dünnwandige Wellen aus Stahl haben nicht die erforderliche Beulsteifigkeit, um der radialen Anpreßkraft der Elektroden beim widerstandselektrischen Schweißen standhalten zu können. Dünnwandige Stahl- oder Aluminiumwellen vertragen nicht die beim Schweißen eintretenden Wärmebeeinflussungszonen, die bei dünnwandigen Bauteilen in der Relation zur unmittelbaren Umgebung sehr groß sind und zu nichttolerierbaren Bauteilschwächungen führen. Belastungstests haben gezeigt, daß gewuchtete, dünwandige Wellen regelmäßig an den Wuchtschweißungen versagen. Die Wuchtschweißungen stellen metallurgische Schwächungen dar, von denen im Versagensfall die Risse oder Brüche ausgehen. Nach Erfahrungen der Anmelderin beginnen beim Reduzieren der Wellrohr-Wandstärke spätesten bei 2 mm die Probleme beim Anschweißen von Wuchtblechen. Die Anmelderin hat widerstandselektrische Punktschweißungen unter Einsatz von gleichgerichtetem Mittelfrequenzstrom und Kondensatorentladungsschweißungen durchgeführt. Trotz gewisser Unterschiede im Schweißergebnis blieb in beiden Fällen metallurgische und z.T. auch mechanische Bauteilschwächungen an der Schweißstelle zurück, die in dynamischen Belastungstests Ausgangspunkt für ein Bauteilversagen waren.

Zwar wird in der Literatur auch Löten oder Kleben als Befestigungstechniken für Wuchtbleche erwähnt (vgl. z.B. DE-PS 725 619), jedoch haben sich diese Techniken zumindest in der Serienproduktion nicht durchsetzen können, weil sie nicht rasch durchführbar oder in dieser Anwendung wegen breiter Streuung relevanter Einflußfaktoren wie physikalische oder chemische Oberflächenbeschaffenheit, Fügequalität u.dgl. nicht prozeßsicher und somit nicht in jedem Fall dauerhaltbar sind. Kleben von Wuchtgewichten ist daher allenfalls auf nicht-schweißbare Werkstoffe oder sonstige Nischenanwendungen beschränkt. Auch das Wuchten von endlosfaser-verstärkten Kunstsoff-Hohlwellen ist problematisch, weil hier allenfalls Klebungen möglich sind, die jedoch nicht rasch durchführbar sind und zumindest bei Wuchtblechbefestigungen auf der Außenseite von Wellen in ihrer Qualität sehr stark streuen.

Aufgabe der Erfindung ist es, die gattungsgemäß zugrundegelegte Schweißverbindung von Wuchtgewichten dahingehend zu verbessern, daß auch dünnwandige, rotierende Hohlkörper prozeßsicher, rasch und dauerfest bei unterschiedlichen Werkstoffpaarungen von Hohlkörper und Wuchtblech gewuchtet werden können.

Diese Aufgabe wird - ausgehend von der gattungsgemäß zugrundegelegten Schweißverbindung - erfindungsgemäß durch die kennzeichnenden Merkmale von Anspruch 1 gelöst. Aufgrund der Anwendung einer Ultraschallschweißung, einem Sonderfall einer Reibschweißung, wird die Schweißwärme unmittelbar an der Kontaktstelle selber zwischen Wuchtblech und Wellrohr-Außenfläche erzeugt und braucht nicht von außen durch die zu verschweißenden Querschnitte an die Kontaktfläche zugeführt werden. Dadurch und aufgrund der sehr raschen Wärme-Erzeugung mittels der hohen Reibungsfrequenz kann die Wärmebeeinflussungszone und die damit einhergehende metallurgische Kerbwirkung sehr klein gehalten werden. Mittels der Ultraschallschweißungen können nicht nur gleichartige Werkstoffe (St/St oder Al/Al), sondern auch sehr unterschiedliche Werkstoffe miteinander verschweißt werden, z.B. Aluminium mit Stahl oder mit Kupfer, Kupfer mit Stahl, Kunststoffbeschichtetes Blech auf Kunststoff und andere ungleiche Paarungen.

Bei ungleichen Paarungen von metallischen Werkstoffen, insbesondere bei spezifisch schweren Wuchtgewichten aus Stahl oder Kupfer auf Leichtmetallwellen muß jedoch beachtet werden, daß im Naßbereich Kontaktkorrosion auftreten kann, wobei das in der Spannungsreihe niedriger stehende Leichtmetall sich opfert. Bei den meisten geläufigen Konstruktionsmetallen geht nämlich das spezifische Gewicht mit der Stellung des Metalles in der elektrochemischen Spannungsreihe der Metalle einher, d.h. je schwerer ein Metall ist, um so edler im Sinne dieser Spannungreihe ist es. Um in einem solchen Fall - z.B. Stahl-Wuchtblech auf Aluminiumwelle - einem Lochfraß an der Welle vorzubeugen, ist es zweckmäßig, auf der Kontaktseite des Wuchtbleches eine elektrisch isolierende Isolationsschicht um die Schweißstelle herum vorzusehen und/oder eine Schutzlackierung auf der freiliegenden Außenseite des Wuchtgewichtes und auf der umgebenden Oberfläche der Hohlwelle anzubringen, die einen Wasserzutritt zur Schweißstelle und in die Kontaktzone zwischen Wellenoberfläche und Wuchtgewicht verhindern. Gerade bei dünnwandigen Hohlkörpern muß eine Korrosion und auch eine Kontaktkorrosion wirksam verhindert werden, weil dünnwandige Werkstoffe aufgrund ihrer geringen Wandstärke nur sehr wenig "Reserve" enthalten. In Kraftfahrzeugen eingesetzte Gelenkwellen sind bei Regen und vor allem im Winter bei Streuzalzeinwirkung stark durch Korrosion und ggf. auch durch Kontaktkorrosion gefährdet.

Zwar ist es bekannt, daß Metalle, und zwar auch Stähle ultraschallgeschweißt werden können (vgl. z. die DE 44 31 130 A1 oder die DE 44 34 132 A1), jedoch konnte der Fachmann aus diesem Stand der Technik keine Hinweise dahingehend entnehmen, daß das Ultraschallschweißen von Wuchtblechen besonders vorteilhaft ist.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend noch erläutert; dabei zeigen:
- Fig. 1: eine in einer Wuchtmaschine eingespannte Hohlwelle mit einem Ultraschall-Schweißkopf zum Anschweißen von Wuchtgewichten und
- Fig. 2: eine vergrößerte Einzeldarstellung der Schweißstelle im Längsschnitt.

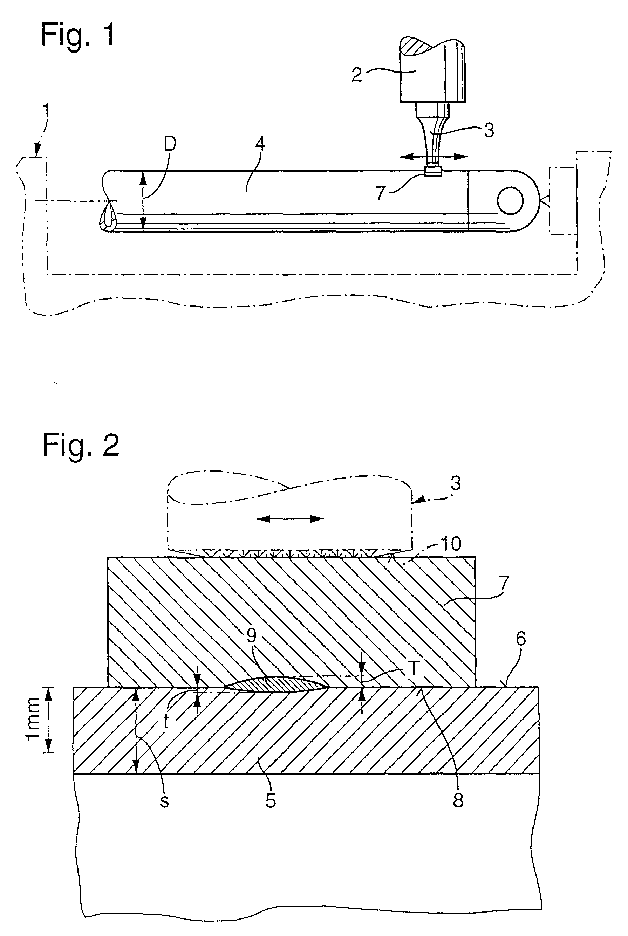

In Figur 1 ist eine Wuchtmaschine 1 strichpunktiert angedeutet, in der eine Hohlwelle 4 aufgenommen ist, die gewuchtet werden soll. Die Wandstärke s der Wandung 5 der Hohlwelle ist im Verehältnis zum Wellendurchmesser D recht klein; nach der in Figur 2 links angegebenen Vergleichsstrecke von 1 mm beträgt die Wandstärke beispielsweise lediglich etwa 1,3 mm. Es wurden Schweißungen an Wellrohren mit einem Außendurchmesser von 60 mm durchgeführt. Das Verhältnis von Wandstärke s zu Außendurchmesser D beträgt in diesem Beispiel 2,17 %, was in der Relation und auch absolut einer sehr leichten Konstruktion entspricht.

Nach dem Wuchtmeßlauf der Hohlwelle 4 in der Wuchtmaschine wird die Welle in eine solche Umfangsstellung gedreht, daß die Unwucht, d.h. die Stelle mit einem Massenüberschuß der Umfangslage des in der Wuchtmaschine integrierten Ultraschallschweißkopfes 2 und seiner Sonotrode 3 genau gegenüber zu liegen kommt. Durch eine geeignte, nicht dargestellte Auswahl- und Zuführeinrichtung wird zunächst ein dem ermittelten Massenüberschuß der Unwucht entsprechendes Wuchtblech 7 von einem Endlosstreifen gewichtsentsprechend abgelängt oder aus einem fein gestaffelten Vorrat unterschiedlich schwerer Wuchtbleche ausgewählt und dieses Wuchtblech 7 der dem Ultraschallschweißkopf zugekehrten Umfangsstelle der Hohlwelle lagedefiniert zugeführt.

Der Ultraschallschweißkopf setzt mit seiner Sonotrode 3 auf das Wuchtblech auf und schweißt das Wuchtblech mit seiner Kontaktseite 8 an die Außenoberfläche der Wandung 5 an. Die Sonotrode vollführt dabei Transversalschwingungen im Ultraschallbereich und erzeugt unter leichter Anpressung des Wuchtbleches an die Wandung in der Kontaktzone Reibungswärme, die zu einer thermisch bedingten Erweichung und Verschweißung der berührenden Teile führt. Die Sonotrode ist an ihrer Aufsetzfläche 10 zweckmäßigerweise leicht bombiert, so daß sich eine im Durchmesser kleiner als die Sonotrode messende Erwärmungs- und Schweißzone ergibt. Im Übrigen kann die Aufsetzfläche - wie meist - durch eine Pyramidenstruktur künstlich gerauht sein, so daß durch die in das Wuchtblech eindringenden Pyramidenspitzen ein Formschluß zur Sonotrode in Transversalrichtung erzeugt wird.

Vorliegend interessiert besonders die in Figur 2 geschwärzt dargestellte, linsenförmige Wärmebeeinflussungszone 9, die beim Ultraschallschweißen entsteht und die etwas größer als die unmittbare Schweißzone selber ist. Die Wärmebeeinflussungszone ist sehr flach und erstreckt sich nur sehr wenig - Maß t - in die Wandung 5 der Hohlwelle hinein, wogegen sie sich in das Wuchtblech etwas mehr hineinwölbt - Maß T. Die dadurch in der Wandung der Hohlwelle erzeugte metallurgische Kerbwirkung ist nur sehr gering und - wenn nicht vernachlässigbar - dann aber zumindest tolerierbar und durch ein entsprechendes Aufmaß bei der Wanddickenbemessung - Maß s - durch ein geringes Mehrgewicht kompensierbar. Bei einer ausgeführten Ultraschallschweißung eines Stahl-Wuchtbleches auf eine Stahl-Hohlwelle konnte bei dem maßlich oben erwähnten Beispiel der Hohlwelle eine Eindringtiefe t der Wärmebeeinflussungszone in die Wandung von nur etwa 0,1 mm erreicht werden. Das Wuchblech haftete sehr sicher an der Hohlwelle. Es bildete sich - im Gegensatz zu anderen Schweißverfahren - in der hier erzeugten kleinen Wärmeeinflußzone kein Grobkorn im Werkstoffgefüge aus, was als besonderer und überraschender Vorteil der vorliegenden Anwendung des Ultraschall-Schweißverfahrens anzusehen ist.

Es sei erwähnt, daß die Ultraschallschweißung nicht nur für die Werkstoffpaarung Stahl/Stahl oder für eine Paarung gleicher Werkstoffe, z.B. Aluminium/Aluminium, geeignet ist, sondern mit diesem Verfahren - bei geeigneter Anpassung der Schweißparameter - ohne weiteres auch ungleiche Metalle oder auch Kunststoffe verschweißbar sind. Beispielsweise können auf diese Weise Aluminium-Hohlwellen mit Stahl- oder Kupfer-Wuchtblechen ausgewuchtet werden. Die Verwendung spezifisch schwerer und bei vorgegebenem Gewicht dünner Wuchtbleche wird bei schnell rotierenden Hohlwellen wegen geringerer Windgeräusche der dünneren Wuchtbleche bevorzugt. Ein gleichschweres und in den Breiten- und Längenabmessungen gleiches Wuchtblech ist in Aluminium (Dichte etwa 2,7 g/cm³) wesentlich dicker wie in Stahl (Dichte etwa 7,9 g/cm³) oder in Kupfer (Dichte etwa 8,9 g/cm³). Gegenüber einer Stahlausführung müßte ein Aluminium-Wuchtblech bei vergleichbaren Bedingungen um den Faktor 2,9 und gegenüber Kupfer um den Faktor 3,4 dicker sein. Dies macht die werkstoffübergreifende Ultraschallschweißung für das Auswuchten von Leichtbauwellen besonders interessant.

Auch Kunststoff-Hohlwellen können mittels Ultraschallschweißung gewuchtet werden, wenn die Wuchtbleche, was ohne weiteres möglich ist, mit einer Kunststoffauflage mit hoher Haftfähigkeit beschichtet sind. Wenn eine Schweißstelle an einer faserverstärkten Duroplast-Welle aufgerauht wird, kann sogar an eine solche Welle ein thermoplast-beschichtetes Wuchtblech mittels Ultraschall dauerhaft und mit hoher Festigkeit "angeschweißt" werden, weil das erweichte Thermoplast sehr fein in die Aufrauhungen der Welle eindringt und sich darin verkrallt. Es handelt sich bei dieser durch Ultraschall bewirkten Verbindung um eine Klebung mittels eines Thermoplastes, wobei der "Kleber" durch Ultraschall-Energie erweicht und aktiviert wird. Diese Art der Klebung ist wegen der raschen Kunststofferweichung, der definierten Kraftwirkung und der raschen Abkühlung unkritisch im Vergleich zu konventionellen Klebungen, weil die dafür relevanten Einflußfaktoren hier weniger zum Tragen kommen.

## Patentansprüche

1. Punktförmige Schweißverbindung eines Wuchtbleches an der Außenseite eines rotationssymmetrischen, umlaufenden Hohlkörpers,
**dadurch gekennzeichnet,**
daß die Schweißverbindung eine Ultraschall-Schweißung ist.
hinein erstreckt.

2. Schweißverbindung nach Anspruch 1,
**dadurch gekennzeichnet,**
daß die Wärmebeeinflussungszone (9) der Ultraschall-Schweißung von der Kontaktfläche (8) zwischen Wuchtblech (7) und Hohlkörper (4) sich maximal um etwa 0,3 mm, vorzugsweise um etwa 0,1 - 0,15 mm (Maß t) in die Wandung (5) des Hohlkörpers (4) hinein erstreckt.

3. Schweißverbindung nach Anspruch 1,
**dadurch gekennzeichnet,**
daß die Wärmebeeinflussungszone (9) sich von der Kontaktfläche (8) zwischen Wuchtblech (7) und Hohlkörper (4) stärker in das Wuchtblech (7, Maß T) als in die Wandung (5, Maß t) des Hohlkörpers (4) hinein erstreckt.

4. Schweißverbindung nach Anspruch 1,
**dadurch gekennzeichnet,**
daß der Hohlkörper (4) aus Stahl und das Wuchtblech (7) aus einem Werkstoff mit einer Dichte von mindestens 7,8 g/cm³, insbesondere Stahl, Messing oder Kupfer besteht.

5. Schweißverbindung nach Anspruch 1,
**dadurch gekennzeichnet,**
daß der Hohlkörper (4) aus einer Aluminiumlegierung und das Wuchtblech (7) aus einem Werkstoff mit einer Dichte von mindestens 7,8 g/cm³, insbesondere Stahl, Messing oder Kupfer besteht.

6. Schweißverbindung nach Anspruch 1,
**dadurch gekennzeichnet,**
daß der Hohlkörper (4) aus einem faserverstärkten Kunststoff und der Wuchtkörper ebenfalls aus Kunststoff oder aus einem auf der Kontaktseite mit Kunststoff beschichtetem Metallstreifen oder aus einem zusammengesinterten Metall/Kunststoff-Verbundwerkstoff besteht.

7. Schweißverbindung nach Anspruch 6,
**dadurch gekennzeichnet,**
daß das Metall des kunststoff-beschichteten Metallstreifens oder des Metall/Kunststoff-Verbundwerkstoffs eine Dichte von mindestens 7,8 g/cm³ aufweist.

8. Schweißverbindung nach Anspruch 1,
**dadurch gekennzeichnet,**
daß bei einem Wuchtkörper aus einem spezifisch schwereren Werkstoff als dem Werkstoff des Hohlkörpers auf der Kontaktseite des Wuchtbleches eine elektrisch isolierende Isolationsschicht um die Schweißstelle herum angeordnet ist, die einen Wasserzutritt zur Schweißstelle und in die Kontaktzone zwischen Hohlkörperoberfläche und Wuchtkörper verhindert.

9. Schweißverbindung nach Anspruch 1,
**dadurch gekennzeichnet,**
daß bei einem Wuchtkörper aus einem spezifisch schwereren Werkstoff als dem Werkstoff des Hohlkörpers auf der freiliegenden Oberfläche des Wuchtkörpers und auf dem umgebenden Oberflächenbereich des Hohlkörpers eine Schutzlackierung angebracht ist, die einen Wasserzutritt zur Schweißstelle und in die Kontaktzone zwischen Hohlkörperoberfläche und Wuchtkörper verhindert.

10. Verfahren zum punktförmigen Anschweißen von Wuchtblechen an die Außenseite eines rotationssymmetrischen, umlaufenden Hohlkörpers, insbesondere zur Herstellung der Schweißverbindung nach Anspruch 1,
**gekennzeichnet durch** die Anwendung des Ultraschall-Schweißens.
